# EUROPEAN PATENT APPLICATION

(11) **EP 1 505 585 A1**
(43) Date of publication of application: **09.02.2005**
(21) Application number: 03723282.4
(22) Date of filing: 09.05.2003
(51) Int. Cl.: G11B 7/26, B29C 39/08, B29C 39/10, B29C 39/36

(54) **METHOD AND DEVICE FOR SEPARATING STAMPER, AND MULTI-LAYERED RECORDING MEDIUM**

(30) Priority: 09.05.2002 JP 2002133741
(71) Applicant: TDK Corporation, Chuo-ku, Tokyo 103-8272 (JP)
(72) Inventor: KANEKO, Yukio, c/o TDK Corporation, Tokyo 103-8272 (JP); MURAKAMI, Yoshiaki, c/o TDK Corporation, Tokyo 103-8272 (JP); YAMAGUCHI, Haruhiko, c/o TDK Corporation, Tokyo 103-8272 (JP); TATSUMI, Yoshiyuki, c/o TDK Corporation, Tokyo 103-8272 (JP); USAMI, Mamoru, c/o TDK Corporation, Tokyo 103-8272 (JP); KOMAKI, Tsuyoshi, c/o TDK Corporation, Tokyo 103-8272 (JP)
(74) Representative: Grünecker, Kinkeldey, Stockmair & Schwanhäusser Anwaltssozietät
(86) International application number: PCT/JP2003/005802
(87) International publication number: WO 2003/096331

(57) **Abstract**

There are provided a stamper delaminating method and a stamper delaminating device for delaminating a stamper from a resin layer, the stamper being formed to have a larger diameter than at least the disk and laminated via the resin layer so as to cover a surface of a disk having at least one recording layer on a supporting substrate having an information recording surface. After the disk is secured, a pressing force that acts in a delamination direction of the stamper is applied to any position on the stamper extending beyond an outer edge of the disk, and after the pressing force causes the stamper to start to be delaminated from the resin layer, the pressing force is continuously applied to the stamper along a periphery thereof. The delamination of the stamper from the resin layer is performed circumferentially of the disk, so that the delamination direction substantially corresponds to an arrangement direction of an information pit and a tangential direction of a groove structure, thereby forming a uniform information pit or a uniform groove structure in the resin layer.

## Description

### TECHNICAL FIELD

The present invention relates to a stamper delaminating method and a stamper delaminating device, and more particularly relates to a stamper delaminating device method and a stamper delaminating device capable of forming a pit and/or a groove structure in a delamination surface of a disk, as well as a multilayer recording medium manufactured by the device.

### BACKGROUND ART

Recently, a variety of disks with a multilayer structure have been proposed as next-generation recording media.

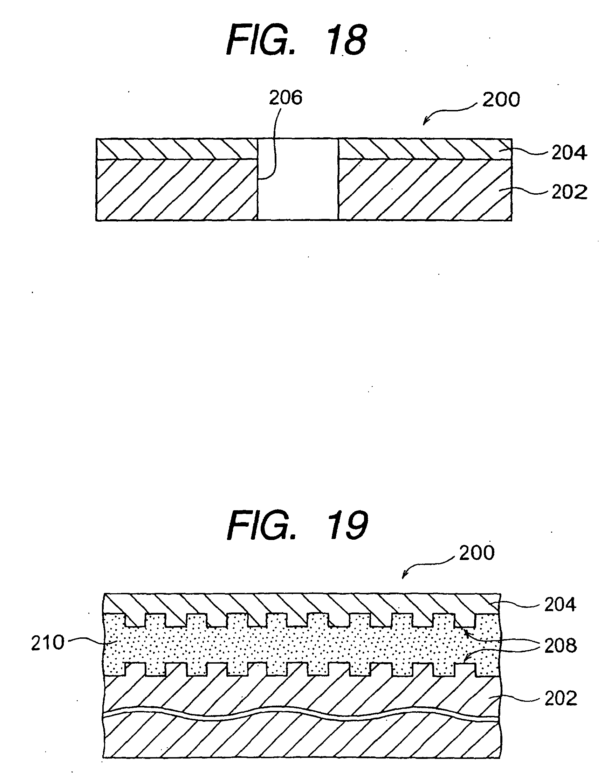

Fig. 18 is a schematic sectional view of a structure of a playback-only double layer disk. As shown in Fig. 18, the playback-only double layer disk 200 has a base substrate 202 of 1.1 mm thickness, and a light transmitting layer 204 of 0.1 mm thickness is formed on one surface of the base substrate 202.

Fig. 19 is an enlarged view of a boundary between the base substrate and the light transmitting layer in Fig. 18. As shown in Fig. 19, the base substrate 202 and the light transmitting layer 204 each have an information pit 208 formed in a spiral fashion around a central hole 206 (see Fig. 18). On a surface of the information pit 208, a reflective layer (not shown) is provided by spattering or vapor deposition, and between information pits 208 that face each other, a resin layer 210 is formed so as to fill an uneven area formed by the information pits 208.

For the multilayer disk thus config.d, a laser beam is applied from above the light transmitting layer 204 for reading.

In forming the information pit 208 or a groove structure in a surface of the resin layer 210 of the above described multilayer disk, a variety of manufacturing methods are used.

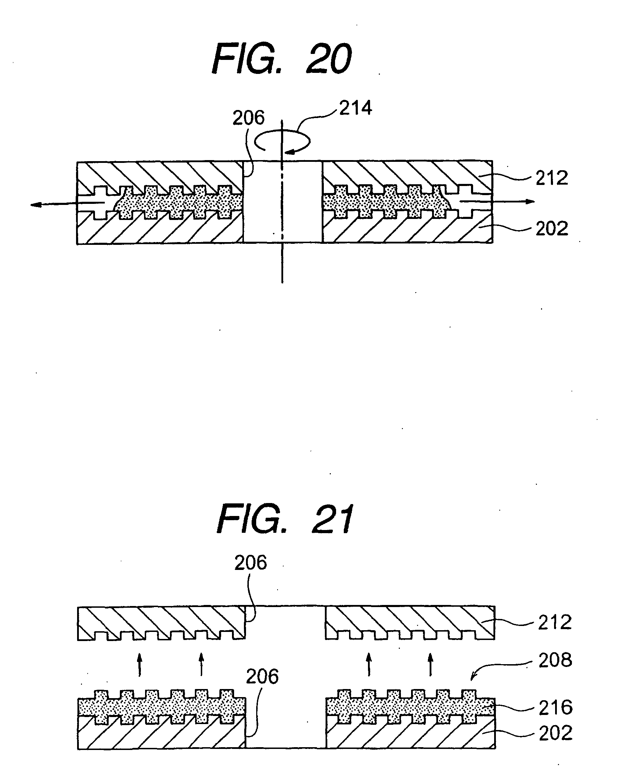

Figs. 20 and 21 illustrate a procedure for forming the information pit using spin coating. In forming the information pit using the spin coating, as shown in Fig. 20, the base substrate 202 and a light transmitting stamper 212 are first placed so that the information pits 208 thereof face each other. Then, ultraviolet curable resin is introduced into a gap between the base substrate 202 and the stamper 212 from the inside thereof, and the base substrate 202 and the stamper 212 are rotated around the central hole 206 as indicated by an arrow 214.

The base substrate 202 and the stamper 212 are thus rotated to allow the ultraviolet curable resin to expand toward an outer periphery of the disk by centrifugal force and fill the gap between the base substrate 202 and the stamper 212. After the gap is filled with the ultraviolet curable resin, ultraviolet light is applied from above the stamper 212 to cure the ultraviolet curable resin and thus form a resin layer 216.

After the resin layer 216 is formed, the stamper 212 is raised as shown in Fig. 21 to delaminate the stamper 212 from the resin layer 216. When the stamper 212 is thus delaminated from the resin layer 216, the information pit 208 transferred from the stamper 212 to the surface of the resin layer 216 is exposed. Thus, a reflective layer may be then formed on a surface of the resin layer 216 by spattering or vapor deposition, and then a light transmitting layer may be formed by a method such as spin coating.

In the above described conventional example, the procedure for forming the information pit 208 in the surface of the resin layer 216 has been described. This method using the stamper, however, is not applied in a limited manner to forming the information pit 208, but may be, of course, applied to forming a groove structure circumferentially of the disk or a combination of the groove structure and the information pit.

However, the method for forming the information pit or the groove structure in the surface of the resin layer using the stamper has problems as described below.

Specifically, when the stamper 212 is delaminated from the resin layer 210, a large tensile force is needed to simultaneously separate the entire stamper 212 from the resin layer 210. Also, after the stamper 212 is separated from the resin layer 210, the tensile force is suddenly released, and thus the delaminated stamper 212 may be detached from a holding portion and fall onto the resin layer 210 to damage the information pit or the groove structure 208.

Further, as described above, the stamper 212 is simultaneously delaminated from the resin layer 210, and thus it is difficult to adjust a delamination speed of the stamper 212 from the resin layer 210 and set an optimum delamination speed to expose the groove structure 208.

### DISCLOSURE OF THE INVENTION

The invention notes the above described conventional problems and has an object to provide a stamper delaminating method and a stamper delaminating device capable of adjusting a delamination speed of the stamper from a resin layer and setting an optimum delamination speed, as well as a multilayer recording medium.

The invention is achieved based on findings that a stamper can be delaminated with a slight force not by simultaneously delaminating the stamper from a resin layer but by starting delaminating the stamper from any direction and gradually performing the delamination circumferentially, and that the delamination is performed circumferentially to increase quality of an information pit or a groove structure.

Specifically, a stamper delaminating method according to the invention is a stamper delaminating. method for delaminating a stamper from a resin layer, the stamper being formed to have a larger diameter than at least the disk and laminated via the resin layer so as to cover a surface of a disk having at least one recording layer on a supporting substrate having an information recording surface, including the steps of: after securing the disk, applying a pressing force that acts in a delamination direction of the stamper to any position on the stamper extending beyond an outer edge of the disk; and after the pressing force causes the stamper to start to be delaminated from the resin layer, continuously applying the pressing force to the stamper along a periphery thereof to cause delamination of the stamper from the resin layer circumferentially of the disk.

Another stamper delaminating method is a stamper delaminating method for delaminating a stamper from a resin layer after forming the resin layer between a disk and the stamper by spin coating, the stamper being formed to have a larger diameter than at least the disk having at least one recording layer, on a supporting substrate having an information recording surface, and being overlaid so as to cover a surface of the disk, including the steps of: setting a position of an edge so that an excess portion exposed to an outside of the disk is left on the stamper side after being cut; after the edge is circumferentially moved along a boundary between the disk and the resin layer to expose the boundary, securing the disk; applying a pressing force that acts in a delamination direction of the stamper to any position on the stamper extending beyond an outer edge of the disk; and after the pressing force causes the stamper to start to be delaminated from the resin layer, continuously applying the pressing force to the stamper along a periphery thereof to cause delamination of the stamper from the resin layer circumferentially of the disk.

A further stamper delaminating method is a stamper delaminating method for delaminating a stamper from a resin layer after forming the resin layer between a disk and the stamper by spin coating, the stamper being formed to have a larger diameter than at least the disk having at least one recording layer, on a supporting substrate having an information recording surface, and being overlaid so as to cover a surface of the disk, including the steps of: setting a position of an edge so that an excess portion exposed to an outside of the disk is left on the stamper side after being cut; after the edge is circumferentially moved along a boundary between the disk and the resin layer to expose the boundary, securing the disk; applying a pressing force that acts in a delamination direction of the stamper to any position on the stamper extending beyond an outer edge of the disk; after the pressing force causes the stamper to start to be delaminated from the resin layer, continuously applying the pressing force to the stamper along a periphery thereof to cause delamination of the stamper from the resin layer circumferentially of the disk; and after the delamination of the stamper, chamfering a resin layer side of an outer periphery of the disk.

A stamper delaminating device according to the invention is a stamper delaminating device for delaminating a stamper from a resin layer, the stamper being formed to have a larger diameter than at least the disk and laminated via the resin layer so as to cover a surface of a disk having at least one recording layer on a supporting substrate having an information recording surface, comprising securing means for holding the disk, a plurality of pressing pins movable up and down in a delamination direction of the stamper placed along a periphery of the stamper extending beyond an outer edge of the disk, and control means for causing the pressing pins to be pressed on the stamper circumferentially of the disk and adjusting an up-and-down movement speed of the pressing pins.

Another stamper delaminating device is a stamper delaminating device for delaminating a stamper from a resin layer after forming the resin layer between a disk and the stamper by spin coating, the stamper being formed to have a larger diameter than at least the disk having at least one recording layer, on a supporting substrate having an information recording surface, and being overlaid so as to cover a surface of the disk, comprising an angle adjusting portion that changes a position of an edge in a pivoting manner, a reciprocating portion that allows the edge to approach and be separated from a boundary between the disk and the resin layer, securing means for holding the disk, a plurality of pressing pins movable up and down in a delamination direction of the stamper placed along a periphery of the stamper extending beyond an outer edge of the disk, and control means for causing the pressing pins to be pressed on the stamper circumferentially of the disk and adjusting an up-and-down movement speed of the pressing pins.

A further stamper delaminating device is a stamper delaminating device for delaminating a stamper from a resin layer after forming the resin layer between a disk and the stamper by spin coating, the stamper being formed to have a larger diameter than at least the disk having at least one recording layer, on a supporting substrate having an information recording surface, and being overlaid so as to cover a surface of the disk, comprising an angle adjusting portion that changes a position of an edge in a pivoting manner, a reciprocating portion that allows the edge to approach and be separated from a boundary between the disk and the resin layer, a chamfering portion that can approach and be separated from the resin layer side of an outer periphery of the disk, securing means for holding the disk, a plurality of pressing pins movable up and down in a delamination direction of the stamper placed along a periphery of the stamper extending beyond an outer edge of the disk, and control means for causing the pressing pins to be pressed on the stamper circumferentially of the disk and adjusting an up-and-down movement speed of the pressing pins.

The pressing pins each are preferably provided with a guide portion for holding an outer edge of the stamper.

A multilayer recording medium according to the invention is manufactured by the above described stamper delaminating device.

### BRIEF DESCRIPTION OF THE DRAWINGS

Fig. 1 is a schematic plan view of a groove forming device to which a stamper delaminating device according to an embodiment is applied as a stamper delaminating portion;
Fig. 2 is an enlarged view of the stamper delaminating portion in Fig. 1;
Fig. 3 is a sectional view taken along the line A-A in Fig. 2;
Fig. 4 is a side view of a structure of a delaminating station;
Fig. 5 is an enlarged view of essential portions of an edge of a cutter reaching a boundary between a disk and the stamper;
Fig. 6 is a partial side view of a structure of the stamper delaminating portion;
Fig. 7 is an enlarged view of essential portions in Fig. 6 showing a state immediately after a delamination pin comes into contact with the stamper;
Fig. 8 is a side view of a structure of an end surface processing portion;
Fig. 9 is an enlarged view of essential portions in Fig. 8;
Fig. 10 illustrates a state of the disk and the stamper passing through the stamper delaminating portion;
Fig. 11 illustrates a state of the disk and the stamper passing through the stamper delaminating portion;
Fig. 12 illustrates a state of the disk and the stamper passing through the stamper delaminating portion;
Fig. 13 illustrates a state of the disk and the stamper passing through the stamper delaminating portion;
Fig. 14 illustrates a state of the disk and the stamper passing through the stamper delaminating portion;
Fig. 15 illustrates a state of the disk and the stamper passing through the stamper delaminating portion;
Fig. 16 illustrates a delaminating state of the stamper;
Fig. 17 is an enlarged view of essential portions of an example application of the stamper delaminating portion;
Fig. 18 is a schematic sectional view of a structure of a playback-only double layer disk;
Fig. 19 is an enlarged view of a boundary between a base substrate and a light transmitting layer in Fig. 18;
Fig. 20 illustrate a procedure for forming an information pit using spin coating; and
Fig. 21 illustrate a procedure for forming an information pit using spin coating.

### BEST MODE FOR CARRYING OUT THE INVENTION

Now, preferable embodiments of a stamper delaminating method and a stamper delaminating device as well as a multilayer recording medium will be described in detail with reference to the drawings.

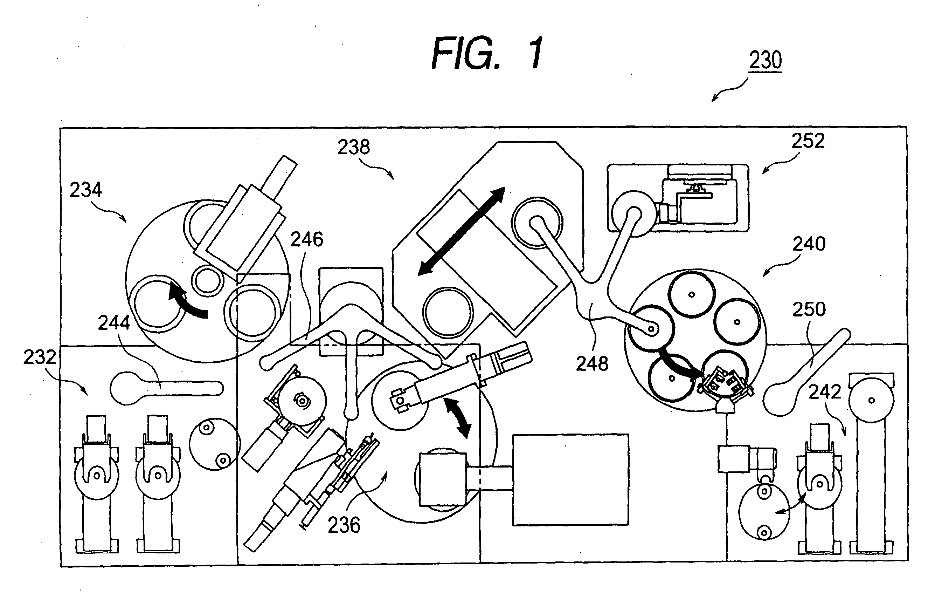

Fig. 1 is a schematic plan view of a groove forming device to which a stamper delaminating device according to an embodiment is applied as a stamper delaminating portion. In this embodiment, the device having the stamper delaminating portion is the groove forming device. The device is, however, not limited to forming a groove structure, but may form an information pit circumferentially of a disk instead of the groove structure, or a combination of the groove structure and the information pit.

The groove forming device 230 to which the stamper delaminating device according to the embodiment is applied as the delaminating portion forms a groove structure in an upper layer recording side of a playback-only double layer disk as a multilayer recording medium. As shown in Fig. 1, the groove forming device 230 includes a disk and stamper supplying portion 232 for supplying a disk and a stamper into the device, a cleaner portion 234 for cleaning a surface of the disk, a stamper laminating portion 236 for laminating the stamper to the disk, an ultraviolet light applying portion 238 for curing ultraviolet curable resin between the disk and the stamper to form a resin layer, a stamper delaminating portion 240 for delaminating the stamper from the disk, and a disk ejecting portion 242 for ejecting the disk and the stamper. Between these components, a supply arm 244, a first transfer arm 246, a second transfer arm 248, and an ejecting arm 250 are provided, and these arms pivot to allow the disk and the stamper to be conveyed to subsequent stages.

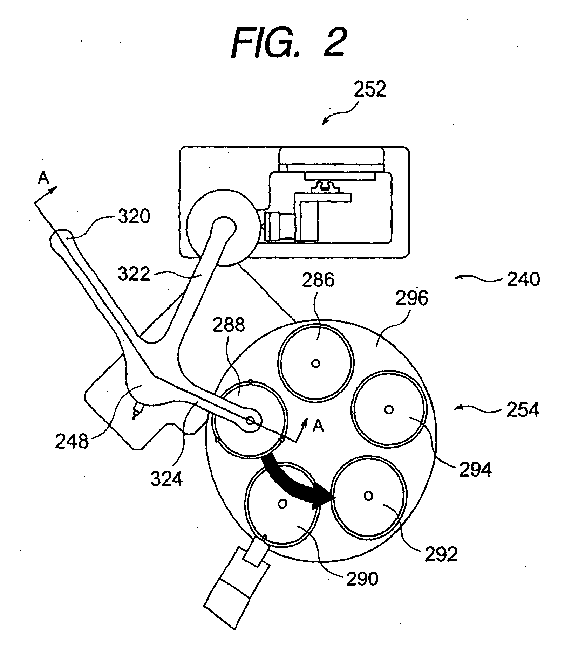

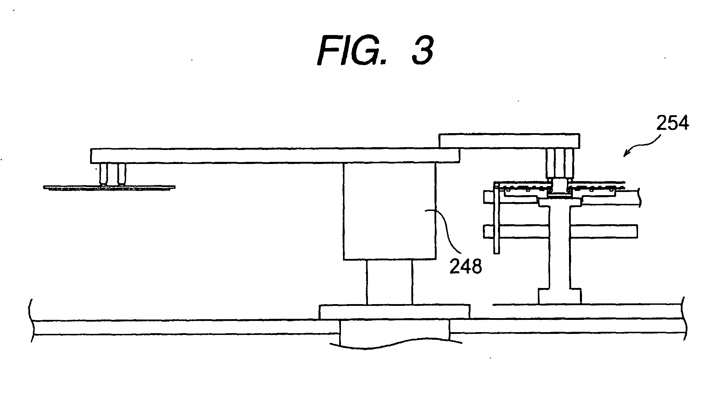

Fig. 2 is an enlarged view of the stamper delaminating portion in Fig. 1, and Fig. 3 is a sectional view taken along the line A-A in Fig. 2.

As shown in Figs. 2 and 3, the stamper delaminating portion 240 includes a delaminating station 252 and a conveying table portion 254. The disk and the stamper laminated to each other are first conveyed to the delaminating station 252, where a cut is made in a laminated portion of the disk and the stamper. Then, the disk and the stamper are conveyed to the conveying table portion 254, where the stamper is delaminated from the disk, and an end surface of the disk after the delamination is polished. The conveyance from the delaminating station 252 to the conveying table portion 254 is performed by the above described second transfer arm 248 pivoting and moving up and down.

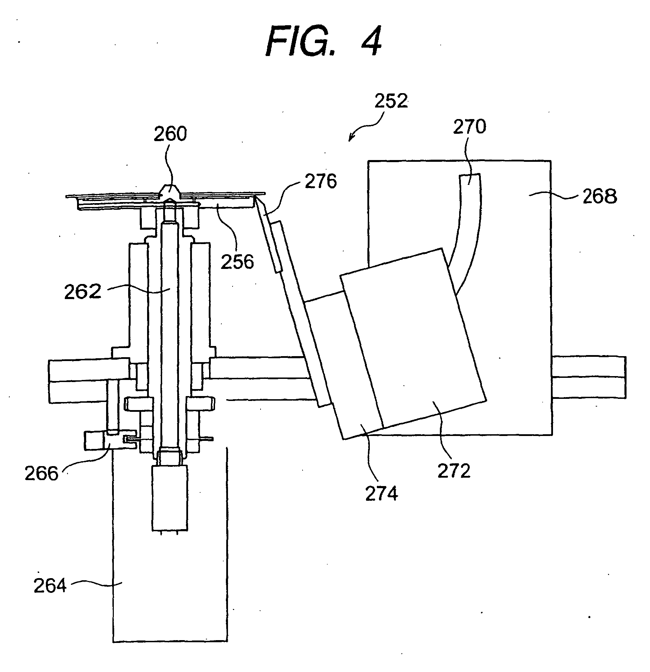

Fig. 4 is a side view of a structure of the delaminating station.

As shown in Fig. 4, the delaminating station 252 is provided with a table 256 on a top thereof that has substantially the same size as an outer diameter of the disk and can be sucked by a vacuum. A positioning pin 260 that can fit in the central holes of the disk and the stamper extends from the center of the table 256, and fitting the disk and the stamper over the positioning pin 260 allows the disk to be positioned relative to the table 256, allows a back side of the disk to be brought into close contact with a surface of the table 256, and allows the disk and the like to be secured to the table by vacuum suction.

On a side opposite from the positioning pin 260 on the table 256, a disk rotating motor 264 is provided via a rotation axis 262. Thus, rotating the disk rotating motor 264 causes a rotation force generated in the disk rotating motor 264 to be transmitted to the table 256 via the rotation axis 262, and the disk and the like secured by the vacuum suction can be rotated around the positioning pin 260 together with the table 256. At a midpoint of the rotation axis 262, an optical sensor 266 (or a sensor of a different type) that detects the rotation of the disk rotating motor 264 is provided, and a below described cutter is advanced and retracted based on values from the optical sensor 266.

On the other hand, an angle adjusting portion 268 is placed on a side of the table 256. The angle adjusting portion 268 is provided with a guide rail 270 curved into an arc and a stage 272 movable along the guide rail 270. The curved shape of the guide rail 270 is set so that when the below described cutter secured on the stage 272 is advanced, an edge of the cutter reaches the boundary between the disk and the stamper at any angles.

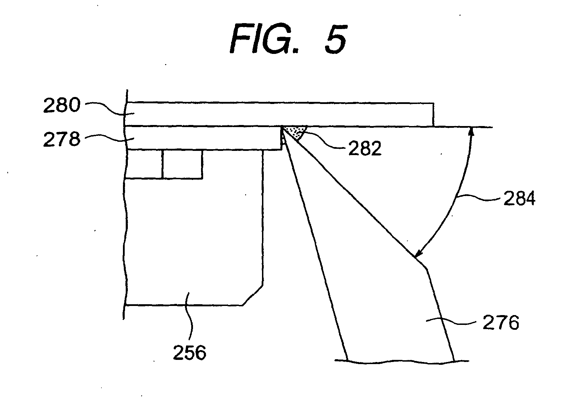

A cylinder 274 as a reciprocating portion is fitted on the stage 272, and the cutter 276 is mounted to the cylinder 274. Thus, when the cylinder 274 is extended, the cutter 276 is advanced together with the cylinder 274, and the edge of the cutter 276 reaches the boundary between the disk and the stamper secured to the table 256. Fig. 5 is an enlarged view of essential portions of the edge of the cutter reaching the boundary between the disk and the stamper. As shown in Fig. 5, in a disk 278 and a stamper 280 laminated to each other using spin coating, a member for forming a resin layer extends beyond an outer edge of the disk 278, which is cured to form an excess portion 282. Thus, the excess portion 282 is located so as to fill a boundary between the disk 278 and the stamper 280, and if the stamper 280 is to be delaminated from the disk 278 without removing the excess portion 282, a force sufficient for separating the excess portion 282 is needed. However, as shown in Fig. 5, the cutter 276 is pressed into the excess portion 282 to first cause the edge to reach the boundary, after the edge reaches the boundary, the disk rotating motor 264 is driven, and the disk and the like are rotated together with the table 256 at least one turn to cut part of the excess portion 282 by the cutter 276 and expose the boundary. The cut is thus made in the excess portion 282 by the cutter 276 to separate the excess portion 282, thereby preventing the excess portion 282 from affecting delamination strength when the stamper 280 is delaminated.

When the cut is made in the excess portion 282, a position of the cutter 276 is desirably set so that an angle 284 that the cutter 276 makes with the stamper 280 is as large as possible. Setting a large angle 284 allows a remainder of the excess portion 282 to be positively left on the stamper 280, and the remainder can be easily removed together with the stamper 280 in a subsequent step. Also, an unshown antistatic nozzle is mounted near the cutter 276, and in making the cut by the cutter 276, air is sprayed onto the edge to eliminate static generated in the cut.

As shown in Fig. 2, the conveying table portion 254 includes a receiving portion 286 for receiving the disk 278 and the stamper 280, a stamper delaminating portion 288 for delaminating the stamper 280 from the disk 278, an end surface processing portion 290 for processing an end surface of the disk after the delamination, a thickness checking portion 292 for measuring a thickness of the resin layer formed on the surface of the disk 278, and an ejecting portion 294 for passing the disk 278 from the conveying table portion 254 to the disk ejecting portion 242.

The conveyance of the disk and the like from the receiving portion 286 to the disk ejecting portion 294 is performed by a conveying table 296 rotating and moving up and down. Further, the conveyance of the disk and the like from the delaminating station 252 to the conveying table portion 254, and the removal of the stamper 280 delaminated from the disk are performed by the second transfer arm 248.

The receiving portion 286 in the conveying table portion 254 is provided, on a center thereof, with a positioning pin for positioning the disk 278 and the stamper 280. Operating the second transfer arm 248 allows the disk 278 and the like on the delaminating station 252 to be moved to the receiving portion 286 and held in the receiving portion 286 using the positioning pin.

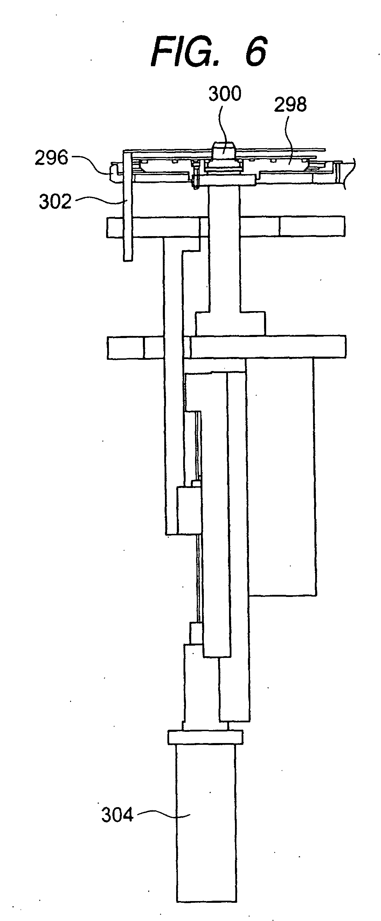

Fig. 6 is a partial side view of a structure of the stamper delaminating portion. As shown in Fig. 6, like the delaminating station 252, the stamper delaminating portion 288 is provided with a table 298 on a top thereof that has a size slightly smaller than the outer diameter of the disk and can be sucked by a vacuum. A positioning pin 300 that can fit in the central holes of the disk and the stamper extends from the center of the table 298, and fitting the disk 278 and the stamper 280 over the positioning pin 300 allows the disk to be positioned relative to the table 298, allows a back side of the disk to be brought into close contact with a surface of the table 298, and allows the disk and the like to be secured to the table by vacuum suction. On an outside of the table 298, three delamination pins 302 are provided at 120° intervals in an area between the outer diameter of the disk 278 and the outer diameter of the stamper 280. The delamination pins 302 are connected to a servomotor 304 placed below the table 298, and operating the servomotor 304 allows tips of the delamination pins 302 to be moved up and down passing through the height of the table 298. The delamination pins 302 placed on the three spots on the outer periphery of the disk 278 can be moved up and down by the single servomotor 304, but the tips are set to have different heights. Unshown control means is also connected to the servomotor 304. This allows a speed of the servomotor 304 to be adjusted by the control means, so that the speed of the delamination pins 302 that press the stamper 280 can be optimally adjusted.

Then, when the servomotor 304 is operated to move the delamination pins 302 up according to a signal from the control means, a first delamination pin 302a first comes into contact with a surface of the stamper 280.

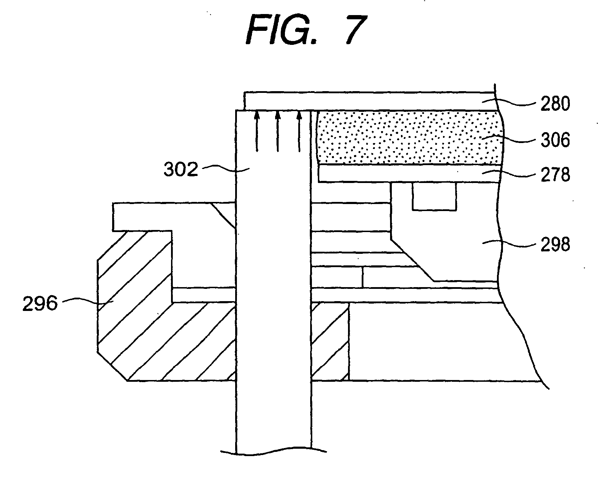

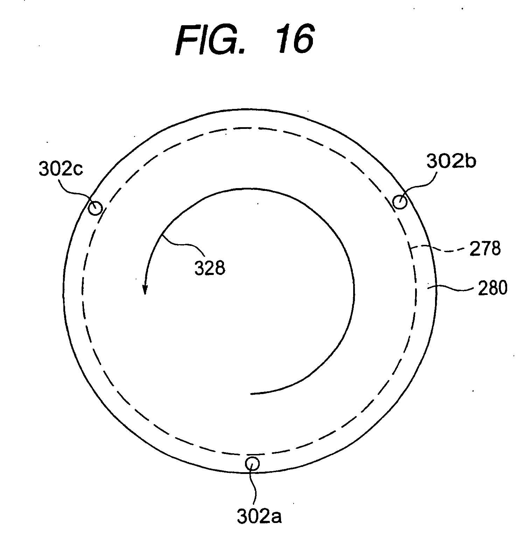

Fig. 7 is an enlarged view of essential portions in Fig. 6 showing a state immediately after the delamination pin comes into contact with the stamper. As shown in Fig. 7, when the first delamination pin 302a comes into contact with the stamper 280 and then presses the stamper 280, delamination occurs between the stamper 280 and a resin layer 306, and a surface of the resin layer 306 starts to be exposed. When the delamination pin 302a is moved up and the delamination between the stamper 280 and the resin layer 306 proceeds to a certain degree, a second delamination pin 302b (see Fig. 16) comes into contact with the surface of the stamper 280 and presses a spot separate from the first delamination pin 302. When the delamination between the stamper 280 and the resin layer 306 proceeds to a certain degree at the spot of the second delamination pin 302b, a third delamination pin 302c (see Fig. 16) comes into contact with the surface of the stamper 280 and delaminates the stamper 280 together with the first and second delamination pins.

The delamination pins thus continuously come into contact with the stamper 280 along the outer edge thereof, so that the stamper 280 is delaminated from the resin layer 306 circumferentially of the resin layer 306. Thus, the delamination of the stamper 280 is performed correspondingly to a groove structure formed in the surface of the resin layer 306 to prevent an uneven area in the stamper 280 from interfering with the groove structure in the resin layer, thereby forming a uniform groove structure in the resin layer.

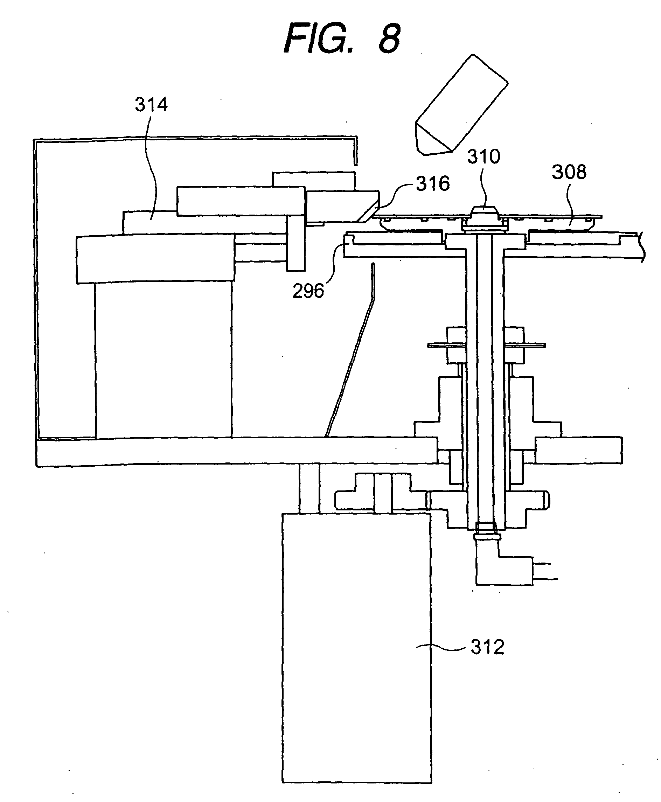

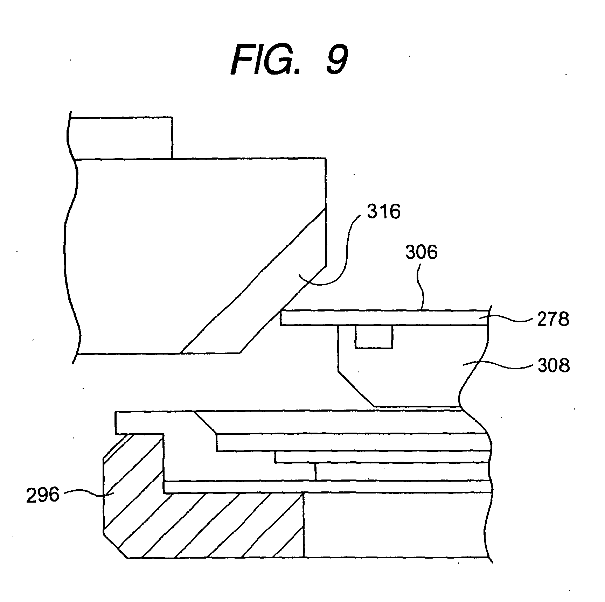

Fig. 8 is a side view of a structure of the end surface processing portion, and Fig. 9 is an enlarged view of essential portions in Fig. 8.

As shown in Figs. 8 and 9, like the stamper delaminating portion 288 and the delaminating station 252, the end surface processing portion 290 is provided with a table 308 on a top thereof that has a size slightly smaller than the outer diameter of the disk and can be sucked by a vacuum. A positioning pin 310 that can fit in the central holes of the disk and the stamper extends from the center of the table 308, and fitting the disk 278 after the delamination over the positioning pin 310 allows the disk 278 to be positioned relative to the table 308, allows a back side of the disk 278 to be brought into close contact with a surface of the table 308, and allows the disk to be secured to the table by vacuum suction. A disk rotating motor 312 is also provided below the table 308, and the disk rotating motor 312 and the table 308 are connected via a power transmission mechanism. Thus, operating the disk rotating motor 312 allows the table 308 to which the disk 278 is sucked to be rotated.

On a side of the table 308, a cutter reciprocating cylinder 314 as a reciprocating portion and a cutter 316 as a chamfering portion incorporated in the cutter reciprocating cylinder 314 are provided. Reciprocating the cutter reciprocating cylinder 314 allows the cutter 316 to be pressed on the resin layer 306 at the outer edge of the disk 278. Chamfering the resin layer 306 at the outer edge of the disk 278 allows the end surface of the resin layer 306 to be processed and allows the excess portion 282 left on the end surface of the outer edge of the disk 278 to be cut away.

An antistatic nozzle 317 is provided above the disk 278, and an unshown exhaust duct is provided on an opposite side of the disk 278. Thus, during the end surface processing of the disk 278 by the cutter 316, air is sprayed from the antistatic nozzle 317 to the disk 278 to blow off shavings and also eliminate static. Such spraying of the air prevents the shavings from depositing on the surface of the disk 278 (that is, the surface of the resin layer 306). The shavings blown off by the air may be exhausted out of the device by the exhaust duct.

A procedure for delaminating the stamper from the disk using the stamper delaminating portion thus conFig.d will be described.

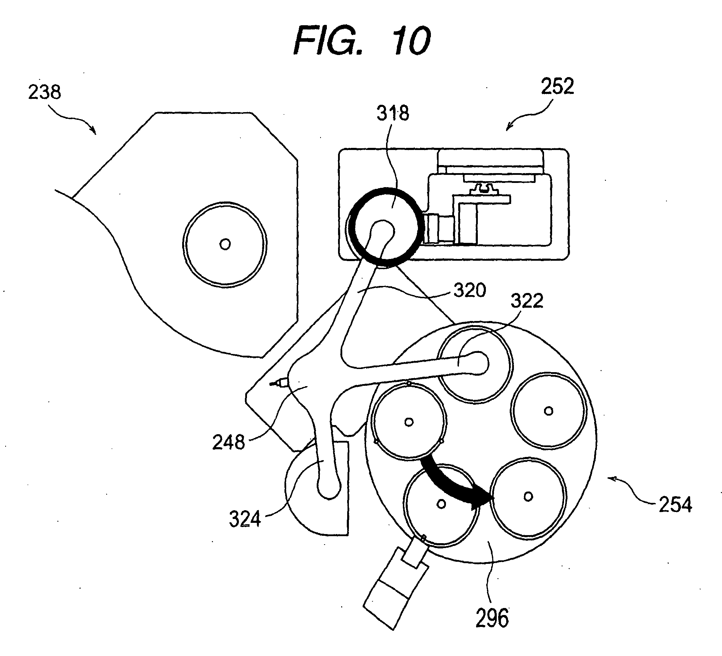

Figs. 10 to 15 illustrate states of the disk and the stamper passing through the stamper delaminating portion.

First, as shown in Fig. 10, the disk and the stamper 318 having passed through the ultraviolet light applying portion 238 are conveyed by rotating the second transfer arm 248 and using the first arm 320 from the ultraviolet light applying portion 238 to the delaminating station 252. Then, the cutter 276 is pressed on the disk and the stamper 318 as described above in the delaminating station. 252 to allow the excess portion 282 to be cut away to expose the boundary between the disk and the stamper.

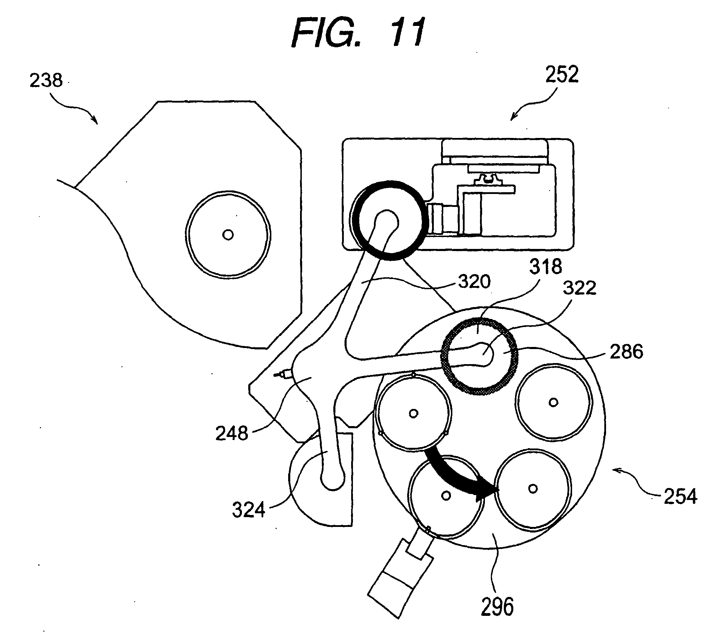

After the excess portion 282 is cut away in the delaminating station 252 to expose the boundary between the disk and the stamper, the second transfer arm 248 is rotated, and the disk and the stamper 318 are conveyed from the delaminating station 252 to the receiving portion 286 of the conveying table portion 254 by the second arm 322 in the second transfer arm 248. The state of the disk and the stamper 318 conveyed to the receiving portion 286 is shown in Fig. 11.

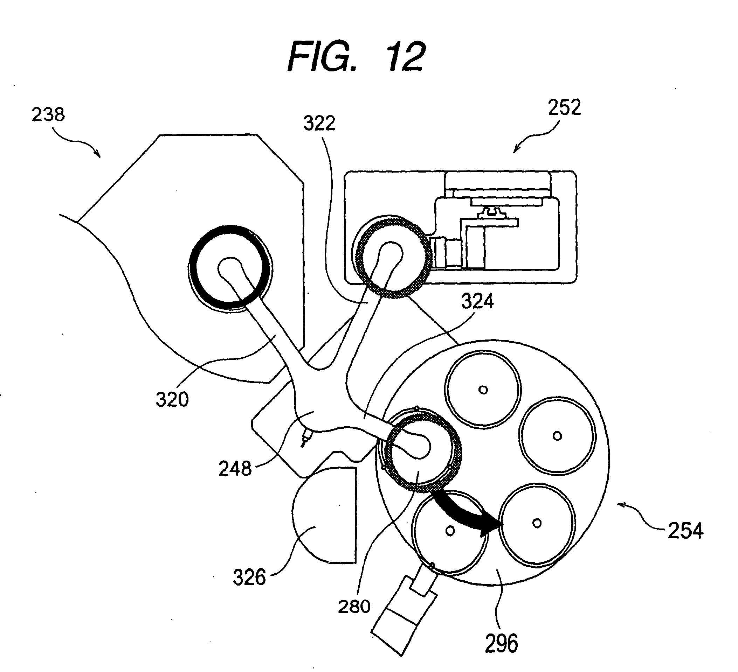

After the disk and the stamper 318 are conveyed to the receiving portion 286, the conveying table 296 is moved up to raise the disk and the stamper 318, and then the disk and the stamper 318 are moved to the stamper delaminating portion 288 by the rotation of the conveying table 296. When the disk and the stamper 318 are thus moved to the stamper delaminating portion 288, the delamination pins 302 are pressed on the stamper 280 to delaminate the stamper 280 from the disk 278 as described above. Then, with the stamper 280 delaminated from the disk 278 being supported by the delamination pins 302, a stamper ejecting arm 324 of the second transfer arm 248 is moved down from above as shown in Fig. 12 to grip the stamper 280 only.

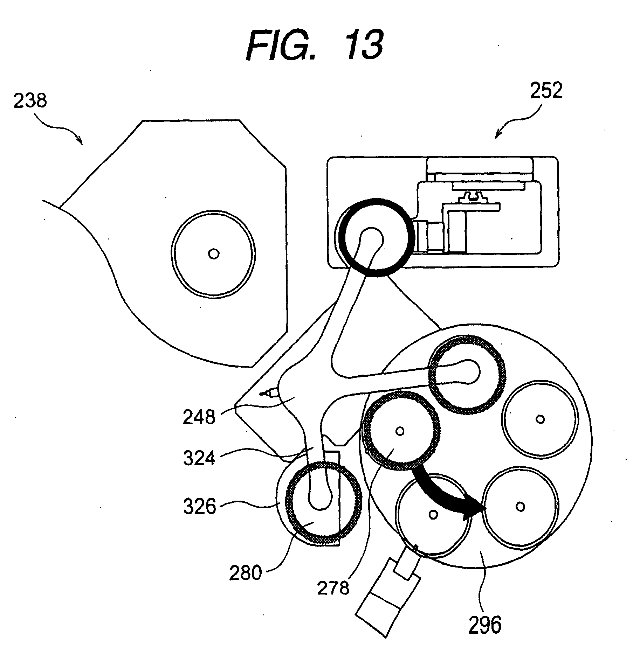

After the delaminated stamper 280 is gripped by the stamper ejecting arm 324, the delaminated stamper 280 is moved onto a stamper disposal portion 326 placed outside the conveying table 296 as shown in Fig. 13, and then the stamper 280 may be passed to a stamper ejecting chute 450.

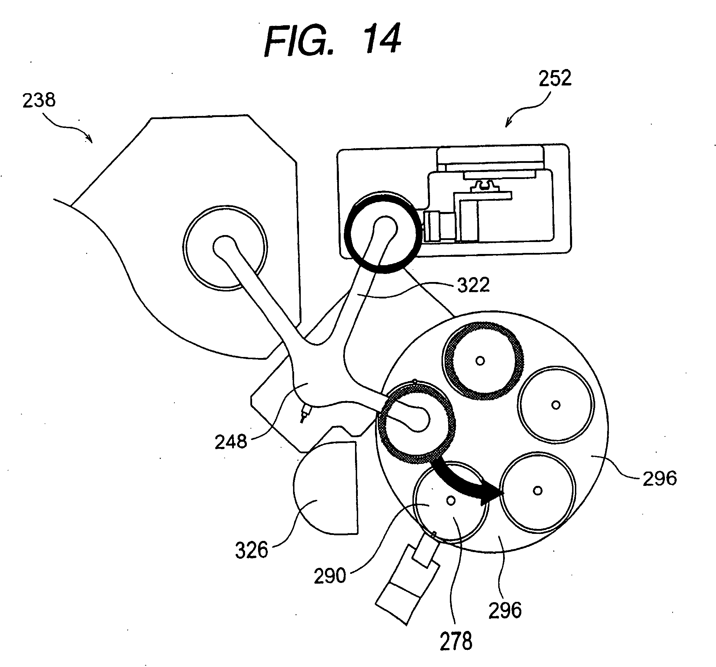

The disk 278 from which the stamper 280 is delaminated is conveyed to the end surface processing portion 290 in a subsequent stage by the conveying table 296 moving up and down and rotating as shown in Fig. 14. Then, in the end surface processing portion 290, the cutter 316 may be pressed on the end surface of the disk 278 to remove the excess portion 282 left on the end surface of the disk 278.

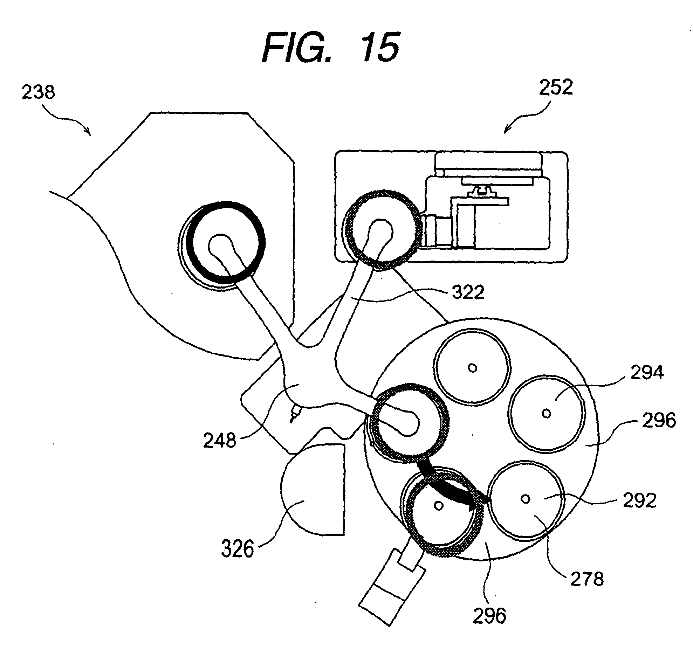

After the excess portion 282 left on the end surface of the disk 278 is removed in the end surface processing portion 290, the conveying table 296 is again moved up and down and rotated to convey the disk 278 to the thickness checking portion 292 as shown in Fig. 15. Then, a thickness of the resin layer 306 is checked in the thickness checking portion 292, and after it is confirmed whether the thickness of the resin layer 306 formed on the disk 278 is within a set value, the result is stored in unshown recording means, and the disk 278 is conveyed to the next stage, the ejecting portion 294. After the disk 278 is conveyed to the ejecting portion 294, the ejecting arm 250 is used to take the disk 278 out of the stamper delaminating portion 240, and screening of the disk 278 into a good product or a bad product may be performed in the disk ejecting portion 242.

The state of one disk 278 (and one stamper 280) passing through the stamper delaminating portion is described above, but it is to be understood that, in an actual operation, the three arms provided in the second transfer arm 248 act simultaneously, and a plurality of disks 278 (and stampers 280) pass through the stamper delaminating portion.

Fig. 16 illustrates a delaminating state of the stamper. As shown in Fig. 16, when the stamper 280 is to be delaminated, the delamination pin 302a first comes into contact with the stamper 280, and then the delamination pin 302b and the delamination pin 302c come into contact with the stamper 280 in succession. Then, according to the order of contact of the delamination pins, the stamper 280 is delaminated from the disk 278 as indicated by an arrow 328 in Fig. 16. When the stamper 280 is delaminated along the arrow 328, the delamination is performed along an extending direction of the groove structure formed in the resin layer 306 (and the stamper 280), thus preventing adjacent grooves (and lands) from being affected by the delamination of the stamper 280.

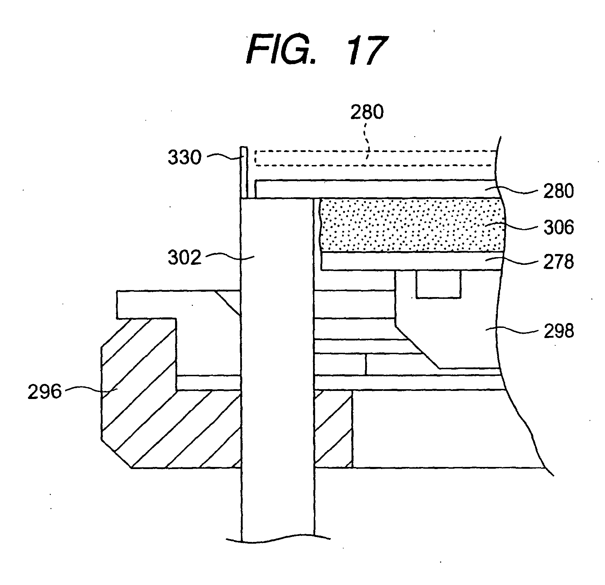

Fig. 17 is an enlarged view of essential portions of an example application of the stamper delaminating portion.

As shown in Fig. 17, the delamination pin 302 is provided with a protrusion 330 on an outside of an area with which the stamper 280 comes into contact. Even if the stamper 280 is raised as indicated by a broken line by elastic deformation being released when the stamper 280 is delaminated from the disk 278, the protrusion 330 provided on the tip of the delamination pin 302 holds the raised stamper 280, thus preventing failures such that the raised stamper 280 is out of position to collide with the disk 278. Thus, the multilayer recording medium delaminated using the method and the device has a clear groove structure formed therein, thereby increasing reliability.

In the embodiment, the three delamination pins are used to delaminate the stamper from the disk, but not limited to this, the number of the delamination pins may be increased, or servo motors for moving up and down the delamination pins may be prepared as many as the delamination pins to control the delamination speed or the like of the stamper 280 more accurately.

As described above, according to the invention, the pressing force is continuously applied along the periphery of the stamper so that the delamination of the stamper from the resin layer is performed circumferentially of the disk. Thus, the delamination caused by the first pressing pin is gradually increased so that only slight pressing forces are required for the second pressing pin and thereafter. Further, the delamination of the stamper is performed circumferentially of the disk, specifically along the information pit or the groove in a concentric or spiral fashion formed in the surface of the resin layer, so that the delamination direction substantially corresponds to an arrangement direction of the information pit and a tangential direction of the groove structure. Therefore, the information pit or the groove structure in the stamper when delaminated is prevented from interfering with the information pit or the groove structure in the resin layer that fits an uneven area formed by the information pit or the groove structure in the stamper, thereby forming a uniform information pit or a uniform groove structure in the resin layer.

## Claims

1. A stamper delaminating method for delaminating a stamper from a resin layer, the stamper being formed to have a larger diameter than at least the disk and laminated via the resin layer so as to cover a surface of a disk having at least one recording layer on a supporting substrate having an information recording surface, **characterized by** comprising the steps of:
after securing said disk, applying a pressing force that acts in a delamination direction of said stamper to any position on said stamper extending beyond an outer edge of said disk; and
after said pressing force causes said stamper to start to be delaminated from said resin layer, continuously applying the pressing force to said stamper along a periphery thereof to cause delamination of said stamper from said resin layer circumferentially of said disk.

2. A stamper delaminating method for delaminating a stamper from a resin layer after forming the resin layer between a disk and the stamper by spin coating, the stamper being formed to have a larger diameter than at least the disk having at least one recording layer, on a supporting substrate having an information recording surface, and being overlaid so as to cover a surface of the disk, **characterized by** comprising the steps of:
setting a position of an edge so that an excess portion exposed to an outside of said disk is left on said stamper side after being cut;
after said edge is circumferentially moved along a boundary between said disk and said resin layer to expose said boundary, securing said disk;
applying a pressing force that acts in a delamination direction of said stamper to any position on said stamper extending beyond an outer edge of said disk; and
after said pressing force causes said stamper to start to be delaminated from said resin layer, continuously applying the pressing force to said stamper along a periphery thereof to cause delamination of said stamper from said resin layer circumferentially of said disk.

3. A stamper delaminating method for delaminating a stamper from a resin layer after forming the resin layer between a disk and the stamper by spin coating, the stamper being formed to have a larger diameter than at least the disk having at least one recording layer, on a supporting substrate having an information recording surface, and being overlaid so as to cover a surface of the disk, **characterized by** comprising the steps of:
setting a position of an edge so that an excess portion exposed to an outside of said disk is left on said stamper side after being cut;
after said edge is circumferentially moved along a boundary between said disk and said resin layer to expose said boundary, securing said disk;
applying a pressing force that acts in a delamination direction of said stamper to any position on said stamper extending beyond an outer edge of said disk;
after said pressing force causes said stamper to start to be delaminated from said resin layer, continuously applying the pressing force to said stamper along a periphery thereof to cause delamination of said stamper from said resin layer circumferentially of said disk; and
after the delamination of said stamper, chamfering said resin layer side of an outer periphery of said disk.

4. A stamper delaminating device for delaminating a stamper from a resin layer, the stamper being formed to have a larger diameter than at least the disk and laminated via the resin layer so as to cover a surface of a disk having at least one recording layer on a supporting substrate having an information recording surface,
**characterized by** comprising:
securing means for holding said disk;
a plurality of pressing pins movable up and down in a delamination direction of said stamper placed along a periphery of said stamper extending beyond an outer edge of said disk; and
control means for causing the pressing pins to be pressed on said stamper circumferentially of said disk and adjusting an up-and-down movement speed of said pressing pins.

5. A stamper delaminating device for delaminating a stamper from a resin layer after forming the resin layer between a disk and the stamper by spin coating, the stamper being formed to have a larger diameter than at least the disk having at least one recording layer, on a supporting substrate having an information recording surface, and being overlaid so as to cover a surface of the disk,
**characterized by** comprising:
an angle adjusting portion that changes a position of an edge in a pivoting manner;
a reciprocating portion that allows said edge to approach and be separated from a boundary between said disk and said resin layer;
securing means for holding said disk;
a plurality of pressing pins movable up and down in a delamination direction of said stamper placed along a periphery of said stamper extending beyond an outer edge of said disk; and
control means for causing the pressing pins to be pressed on said stamper circumferentially of said disk and adjusting an up-and-down movement speed of said pressing pins.

6. A stamper delaminating device for delaminating a stamper from a resin layer after forming the resin layer between a disk and the stamper by spin coating, the stamper being formed to have a larger diameter than at least the disk having at least one recording layer, on a supporting substrate having an information recording surface, and being overlaid so as to cover a surface of the disk,
**characterized by** comprising:
an angle adjusting portion that changes a position of an edge in a pivoting manner;
a reciprocating portion that allows said edge to approach and be separated from a boundary between said disk and said resin layer;
a chamfering portion that can approach and be separated from said resin layer side of an outer periphery of said disk;
securing means for holding said disk;
a plurality of pressing pins movable up and down in a delamination direction of said stamper placed along a periphery of said stamper extending beyond an outer edge of said disk; and
control means for causing the pressing pins to be pressed on said stamper circumferentially of said disk and adjusting an up-and-down movement speed of said pressing pins.

7. The stamper delaminating device according to any one of claims 4 to 6, **characterized in that** said pressing pins each are provided with a guide portion for holding an outer edge of said stamper.

8. A multilayer recording medium **characterized by** being manufactured by a stamper delaminating device according to any one of claims 4 to 6.

9. A multilayer recording medium **characterized by** being manufactured by a stamper delaminating device according to claim 7.
